# NEUE EUROPÄISCHE PATENTSCHRIFT

(11) **EP 2 159 465 B2**
(45) Veröffentlichungstag und Bekanntmachung des Hinweises auf die Entscheidung über den Einspruch: **03.09.2014**
(45) Hinweis auf die Patenterteilung: 16.03.2011
(21) Anmeldenummer: 09010632.9
(22) Anmeldetag: 19.08.2009
(51) Int. Cl.: F16L 25/00

(54) **Druckschlauch für ein wasserführendes System, insbesondere zum Anschließen von beweglichen Sanitärarmaturen oder zum Verbinden von Teilen des wasserführenden Systems**
Pressure hose for a water-guidance system, in particular for attaching mobile sanitary fittings or connecting parts of the water-guidance system
Tuyau flexible sous pression pour un système de transport d'eau, notamment pour le raccordement d'armatures sanitaires mobiles ou pour la liaison d'éléments du système de transport d'eau

(30) Priorität: 27.08.2008 DE 102008039991
(43) Veröffentlichungstag der Anmeldung: 03.03.2010
(73) Patentinhaber: Kottmann GmbH, 58638 Iserlohn (DE)
(72) Erfinder: Dickel, Heiko, 58769 Nachrodt-Wibilingswerde (DE)
(74) Vertreter: Von Rohr Patentanwälte Partnerschaft mbB

(56) Entgegenhaltungen:
- WO-A1-91/04434
- US-A- 3 017 203
- US-A- 4 729 583
- US-A- 5 597 186

## Beschreibung

Die Erfindung betrifft einen Druckschlauch für ein wasserführendes System, insbesondere zum Anschließen von beweglichen Sanitärarmaturen oder zum Verbinden von Teilen des wasserführenden Systems, mit den Merkmalen des Oberbegriffs von Anspruch 1.

Druckschläuche dieser Art sind insbesondere im Sanitärbereich seit langem vielfältig im Einsatz. Dabei dient der glatte Innenschlauch aus Kunststoff als wasserführendes fluiddichtes Medium und die Außenummantelung aus einem Geflecht zur Druckstabilität. Solche Schläuche sind bisher in ihrer Flexibilität begrenzt, da der innenschlauch relativ starr ist, zumindest dann, wenn zur Gewährleistung eines ausreichenden Knickschutzes die Wandstärke entsprechend groß ist.

Für andere Einsatzbereiche sind auch bereits Druckschläuche bekannt geworden, bei denen der Innenschlauch nicht aus einem glatten Schlauch besteht, sondern aus einem Wellschlauch. So ist aus DE 86 07 066 U1 ein Druckschlauch für höchste Anforderungen bekannt, der einen Innenschlauch aus einer gewellten Schlauchfolie aus Polytetrafluorethylen und eine Außenwandverstärkung aufweist, die aus einer engmaschigen Edelstahlumflechtung bestehen kann. Ein solcher Schlauch ist insbesondere für industrielle Anwendungen, beispielsweise bei Ölbohrungen oder in der Fertigungsindustrie, bestimmt und weist aufgrund des gewählten Innenschlauches eine erhöhte Flexibilität und einen verringerten Biegeradius auf. Ein solcher Schlauch soll mit herkömmlichen Anschlusssystemen einsetzbar sein. Solche Anschlusssysteme sind jedoch für einen Schlauch im Sanitärbereich nicht geeignet, bei dem in der Regel das Schlauchende auf einen rohrförmigen Anschlussstutzen unter Verwendung einer außen liegenden Presshülse aufgepresst wird.

Der bekannte Druckschlauch, von dem die Erfindung ausgeht (US 5,297,822 A), ist für Hochdruckanwendungen bestimmt und geeignet. Ein durch Innenhochdruck aufgeweiteter, rohrförmiger Anschlussstutzen des Anschlussstückes fixiert das Schlauchende des Druckschlauches drehfest gegenüber einer als Widerlager dienenden äußeren Hülse.

Aufgabe der Erfindung ist es, einen Druckschlauch für ein wasserführendes System anzugeben, der kostengünstiger herstellbar ist.

Diese Aufgabe wird bei einem Druckschlauch mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der abhängigen Unteransprüche.

Es wird somit ein Druckschlauch zur Verfügung gestellt, der von den an sich bekannten Vorteilen eines von einem wellschlauch gebildeten Innenschlauches Gebrauch macht, aber an die speziellen Bedingungen im Sanitärbereich hinsichtlich der Druckfestigkeit und des Knickschutzes angepasst ist. Durch die spezielle Gestaltung des Anschlussstutzens mit umlaufenden Ringwülsten und Rillen und axial verlaufenden Einkerbungen wenigstens in einem Teil der Ringwülste ist gewährleistet, dass das Innenschlauchende einerseits druckdicht mit dem Anschlussstutzen verpresst ist, andererseits aber auch ein Verdrehschutz des Schlauches gegenüber dem Anschlussstutzen zuverlässig gewährleistet ist, da beim Aufpressen des Innenschlauches der Innenschlauch in die Einkerbungen eingedrückt wird. Der Innenwellschlauch liegt dann aufgrund der Anpassung der Ringwulst- bzw. Rillenkontur des rohrförmige Anschlussstutzens an die Kontur des Wellschlauches dicht und verdrehsicher an.

In besonders bevorzugter Ausgestaltung ist vorgesehen, dass der Wellschlauch parallel gewellt ist. Unter einer parallelen Wellung ist zu verstehen, dass die Wellen parallel zueinander ausgebildet sind und symmetrisch zur Schlauchlängsachse auf einem Kreisumfang verlaufen, also nicht schrauben- oder spiralförmig ausgebildet sind. Ein solcher Schlauch weist eine hohe Flexibilität bei kleinen Biegeradien ohne den unerwünschten Effekt des spiral- bzw. schraubförmigen Verdrehens bzw. Verdrillens auf.

In besonders bevorzugter Ausgestaltung kann der Wellschlauch über seine Länge unterschiedlich ausgebildet sein, um einerseits die Flexibilität in bestimmten Bereichen des Schlauches, z.B. in den Endbereichen, gezielt zu beeinflussen und um insbesondere andererseits zur Verringerung der Geräuschentwicklung durch das Strömungsverhalten innerhalb des Schlauches beizutragen.

Dazu kann bevorzugt vorgesehen sein, dass der Abstand benachbarter Wellen des Wellschlauches von der axialen Breite der Wellen abweicht. So können die im Schlauchinneren entstehenden Strömungstoträume unterhalb der Wellen gezielt beeinflusst werden, um die Geräuschentwicklung zu reduzieren und um eine möglichst laminare Strömung im Schlauch zu erreichen.

Ferner kann bevorzugt vorgesehen sein, dass der Abstand zwischen benachbarten Wellen des Wellschlauches entlang der Schlauchlänge unterschiedlich ausgebildet ist, um die Flexibilität entlang der Schlauchlänge variieren zu können.

Des Weiteren kann vorgesehen sein, dass die axiale Breite der Wellen des Wellschlauches entlang der Schlauchlänge unterschiedlich ist.

Als Material für den Wellschlauch ist bevorzugt Polyethylen, Polypropylen oder jeder trinkwasserzugelassene, andere geeignete Werkstoff vorgesehen.

Der Außenschlauch besteht bevorzugt aus einem Geflecht aus Kunststoff und/oder Metall, insbesondere Edelmetall oder Aluminium.

Der erfindungsgemäße Druckschlauch ist vorzugsweise als druckfester Verbindungsschlauch, als Küchenbrauseschlauch oder als Einziehschlauch für Brauseschläuche ausgebildet.

Die Erfindung ist nachstehend anhand der Zeichnung beispielhaft näher erläutert. Diese zeigt in
- Fig. 1: eine perspektivische Darstellung eines bereichswei- se dargestellten erfindungsgemäßen Druckschlauches mit endseitigem Anschlussstück,
- Fig. 2: eine Seitenansicht des Druckschlauches nach Fig. 1,
- Fig. 3: einen Schnitt gemäß der Linie A-A in Fig. 2,
- Fig. 4: das Anschlussstück des Druckschlauches in Seitenan- sicht und in
- Fig. 5: eine perspektivische Darstellung des Anschluss- stückes nach Fig. 4.

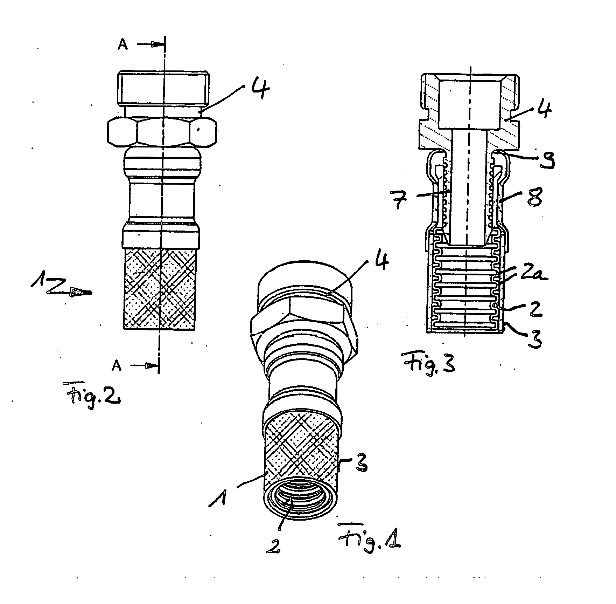

Ein erfindungsgemäßer Druckschlauch ist in den Fig. 1 bis 3 nur bereichsweise mit einem Schlauchende dargestellt und allgemein mit 1 bezeichnet. Dieser Druckschlauch 1 für ein wasserführendes System, insbesondere zum Anschließen von beweglichen Sanitärarmaturen, wie eine Küchenbrause oder auch eine Brause oder Duscharmatur oder zum Verbinden von Teilen des wasserführenden Systems als Verbindungsschlauch weist einen Innenschlauch und eine Außenummantelung auf.

Der Innenschlauch ist von einem Wellschlauch 2 aus Kunststoff gebildet, der bevorzugt parallel gewellt ausgebildet ist. Dieser Innenwellschlauch 2 ist von einer Außenummantelung 3 aus einem Geflecht umgeben, welches unmittelbar am Innenwellschlauch 2 anliegt.

Der Innenwellschlauch 2 aus Kunststoff kann z.B. aus Polyethylen bestehen. Die Außenummantelung 3 besteht aus einem Geflecht aus Kunststoff oder Metall oder einer Kombination dieser Stoffe. Als Metall kommt vor allem Edelstahl oder Aluminium in Betracht.

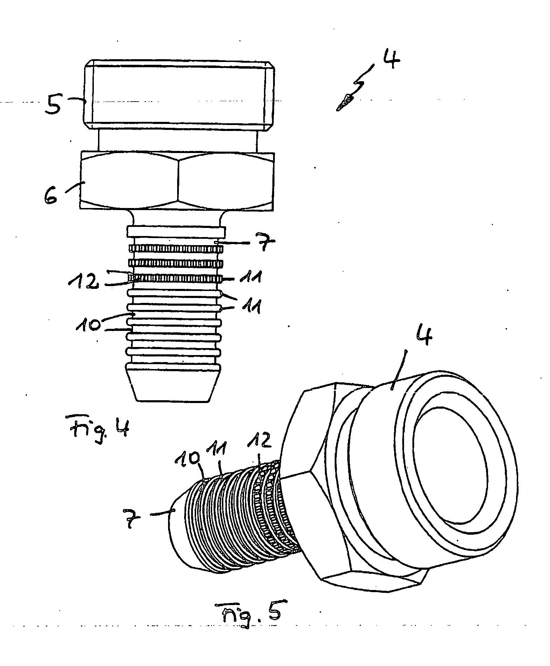

Wenigstens ein Ende des Druckschlauches 1 ist, wie dargestellt, mit einem allgemein mit 4 bezeichneten Anschlussstück (siehe insbesondere Fig. 4 und 5) versehen. Dieses Anschlussstück 4, das freiendseitig z.B. mit einem Außengewinde 5 und benachbart dazu mit einem Sechskant 6 versehen sein kann, weist einen rohrförmigen Anschlussstutzen 7 auf, auf den das Ende des Druckschlauches 1 aufgepresst ist, wozu in üblicher Weise eine Presshülse 8 eingesetzt ist, die außen auf der Außenummantelung 3 angeordnet ist und ein Widerlager für den eingepressten Anschlussstutzen 7 bildet. Dabei ist bevorzugt am Ende der Presshülse 8 in einem Bereich 9 die Pressung so ausgeführt, dass ein direkter Metallkontakt zwischen dem Bereich 9 der Presshülse 8 und dem Anschlussstutzen 7 besteht.

Der rohrförmige Anschlussstutzen 7 ist in Anpassung an die Innenkontur des Innenwellschlauches 2 mit umlaufenden Rillen 10 versehen, die durch angrenzende umlaufende Ringwülste 11 gebildet sind. Der Druckschlauch 1 wird vor dem Verpressen so auf dem Anschlussstutzen des Anschlussstücks 4 angeordnet, dass der Innenwellschlauch 2 mit seinen radial nach außen gerichteten Wellen 2a innenseitig an den Ringwülsten 11 des Anschlussstutzens 7 anliegt und mit seinen dazwischen liegenden Bereichen in die Rillen 10 eingreift.

Neben dieser Anpassung des Anschlussstutzens 7 an die Innenkontur des Druckschlauches 1 weisen wenigstens einige der Ringwülste 11 des Anschlussstutzens 7 axial verlaufende Einkerbungen 12 auf. Diese Einkerbungen dienen als Verdrehschutz zwischen dem Druckschlauch 1 und dem Anschlussstück 4. Beim Verpressen des Schlauchendes mit dem Anschlussstück 4 werden die entsprechenden Schlauchbereiche in die Einkerbungen 12 eingedrückt, so dass ein Verdrehen des Druckschlauches 1 gegenüber dem Anschlussstück 4 zuverlässig vermieden ist.

Der Innenwellschlauch 2 kann in Anpassung an verschiedene Einsatzgegebenheiten eine spezielle geometrische Gestaltung aufweisen, die zeichnerisch nicht dargestellt ist. So kann der Abstand benachbarter Wellen 2a des Wellschlauches 2 von der axialen Breite der Wellen 2a abweichen. Ferner kann der Abstand zwischen benachbarten Wellen 2a entlang der Schlauchlänge unterschiedlich ausgebildet sein. Des Weiteren ist es möglich, dass die axiale Breite der Wellen 2a des Wellschlauches 2 entlang der Schlauchlänge unterschiedlich ist. Durch diese Variation der geometrischen Gestaltung des Innenwellschlauchs 2 ist es möglich, einerseits die Flexibilität über die Schlauchlänge zu beeinflussen, andererseits kann die axiale Erstreckung der durch die Wellen 2a im Inneren des Innenwellschlauches 2a gebildeten Strömungstoträume gezielt beeinflusst werden, um eine möglichst laminare Durchströmung im Druckschlauch 1 zu erreichen, damit möglichst geringe Strömungsgeräusche entstehen.

Natürlich ist die Erfindung nicht auf die dargestellten Ausgestaltungen beschränkt. Weitere Ausgestaltungen sind möglich, ohne den Grundgedanken der Erfindung zu verlassen. So können die Einkerbungen 12 auch anders ausgebildet und angeordnet und dgl. mehr.

## Patentansprüche

1. Druckschlauch für ein wasserführendes System,
insbesondere zum Anschließen von beweglichen Sanitärarmaturen oder zum Verbinden von Teilen des wasserführenden Systems,
mit einem Innenschlauch aus Kunststoff und einer Außenummantelung (3) aus einem Geflecht,
wobei der Innenschlauch von einem parallel gewellten Wellschlauch (2) gebildet und der Wellschlauch (2) unmittelbar von der Außenummantelung (3) umgeben ist,
wobei wenigstens ein Schlauchende des Druckschlauchs (1) mit einem Anschlussstück (4) mit einem rohrförmigen Anschlussstutzen (7) versehen ist,
wobei das Schlauchende auf dem rohrförmigen Anschlussstutzen (7) angeordnet ist,
wobei der rohrförmige Anschlussstutzen (7) abwechselnd umlaufende Rillen (10) und Ringwülste (11) aufweist, die derart an die Innenkontur des Wellschlauches (2) angepasst sind, dass der Wellschlauch (2) mit seinen radial nach außen gerichteten Wellen innenseitig an den Ringwülsten (11) des Anschlussstutzens (7) anliegt und mit seinen dazwischen liegenden Bereichen in die Rillen (10) des Anschlussstutzens (7) eingreift,
**dadurch gekennzeichnet,**
**dass** wenigstens einige der Ringwülste (11) mit axial verlaufenden Einkerbungen (12) versehen sind und
**dass** das Schlauchende von außen mittels einer Presshülse (8) auf den Anschlussstutzen (7) aufgepresst ist.

2. Druckschlauch nach Anspruch 1,
**dadurch gekennzeichnet,**
**dass** der Abstand benachbarter Wellen (2a) des Wellschlauches (2) von der axialen Breite der Wellen (2a) abweicht.

3. Druckschlauch nach Anspruch 2,
**dadurch gekennzeichnet,**
**dass** der Abstand zwischen benachbarten Wellen (2a) des Wellschlauches (2) entlang der Schlauchlänge unterschiedlich ausgebildet ist.

4. Druckschlauch nach Anspruch 1, 2 oder 3,
**dadurch gekennzeichnet,**
**dass** die axiale Breite der Wellen (2a) des Wellschlauches (2) entlang der Schlauchlänge unterschiedlich ist.

5. Druckschlauch nach einem oder mehreren der Ansprüche 1 bis 4,
**dadurch gekennzeichnet,**
**dass** der Wellschlauch (2) aus Polyethylen oder Polypropylen besteht.

6. Druckschlauch nach einem oder mehreren der Ansprüche 1 bis 5,
**dadurch gekennzeichnet,**
**dass** das Geflecht (3) aus Kunststoff und/oder Metall besteht.

7. Druckschlauch nach einem oder mehreren der Ansprüche 1 bis 6,
**dadurch gekennzeichnet,**
**dass** dieser als druckfester Verbindungsschlauch, als Küchenbrauseschlauch oder als Einziehschlauch für Brauseschläuche ausgebildet ist.

## Claims

1. A pressure hose for a water-carrying system, in particular for the connection of movable sanitary fittings or for connecting parts of the water-carrying system, comprising an inner hose of plastic material and an outer jacket (3) of a braid, wherein the inner hose is formed by a corrugated hose (2) corrugated in parallel and the corrugated hose (2) is surrounded directly by the outer jacket (3), wherein at least one hose end of the pressure hose (1) is provided with a connecting portion (4) having a tubular connector (7), wherein the tube end is arranged on the tubular connector (7), wherein the tubular connector (7) has alternately circumferential grooves (10) and annular beads (11) adapted to the inner contour of the corrugated hose (2) in such a way that the corrugated hose (2) has its radially outwardly directed corrugations butting against the inside of the annular beads (11) of the connector (7) and has its regions located therebetween engaging in the grooves (10) of the connector (7), **characterized in that** at least some of the annular beads (11) are provided with axially extending notches (12), and **in that** the hose end is pressed onto the connector (7) from the outside by means of a pressing sleeve (8).

2. A pressure hose according to claim 1 **characterized in that**, the spacing of adjacent corrugations (2a) of the corrugated hose (2) differs from the axial width of the corrugations (2a).

3. A pressure hose according to claim 2 **characterized in that**, the spacing between adjacent corrugations (2a) of the corrugated hose (2) is different along the hose length.

4. A pressure hose according to claim 1, claim 2 or claim 3 **characterized in that**, the axial width of the corrugations (2a) of the corrugated hose (2) is different along the hose length.

5. A pressure hose according to one or more of claims 1 to 4 **characterized in that**, the corrugated hose (2) comprises polyethylene or polypropylene

6. A pressure hose according to one or more of claims 1 to 5 **characterized in that**, the braid (3) comprises plastic material and/or metal.

7. A pressure hose according to one or more of claims 1 to 6 **characterized in that**, it is in the form of a pressure-resistant connecting hose, a kitchen spray hose or a retractable hose for shower hoses.

## Revendications

1. Tuyau flexible sous pression pour un système d'amenée d'eau, en particulier pour le raccordement de robinetteries sanitaires mobiles ou pour le raccordement de parties du système d'amenée d'eau, comprenant un tuyau intérieur en matière plastique et une enveloppe extérieure (3) formée d'une tresse, le tuyau intérieur étant formé par un tuyau flexible ondulé (2) présentant des ondulations parallèles et ledit tuyau flexible ondulé (2) étant entouré directement par l'enveloppe extérieure (3), au moins une extrémité du tuyau flexible sous pression (1) étant pourvue d'une pièce de raccordement (4) avec une pipe de raccordement (7) de forme tubulaire, l'extrémité de tuyau étant disposée sur la pipe de raccordement (7) de forme tubulaire, la pipe de raccordement (7) de forme tubulaire comportant, en alternance, des rainures périphériques (10) et des bourrelets annulaires (11) qui sont adaptés au contour intérieur du tuyau flexible ondulé (2) de telle sorte que le tuyau flexible ondulé (2) s'applique avec ses ondulations orientées radialement vers l'extérieur du côté intérieur contre les bourrelets annulaires (11) de la pipe de raccordement (7) et vienne en prise avec ses régions intermédiaires dans les rainures (10) de la pipe de raccordement (7), **caractérisé en ce que** quelques-uns au moins des bourrelets annulaires (11) sont dotés de rainures (12) qui s'étendent axialement et **en ce que** l'extrémité du tuyau est montée avec pressage de l'extérieur au moyen d'une douille de pressage (8) sur la pipe de raccordement (7).

2. Tuyau flexible sous pression selon la revendication 1, **caracterise en ce que** la distance d'ondulations voisines (2a) du tuyau ondule (2) diffère de la largeur axiale des ondulations (2a).

3. Tuyau flexible sous pression selon la revendication 2, **caracterise en ce que** la distance entre ondulations voisines (2a) du tuyau ondule (2) est réalisée de façon differente le long de la longueur du tuyau.

4. Tuyau flexible sous pression selon la revendication 1, 2 ou 3, **caracterise en ce que** la largeur axiale des ondulations (2a) du tuyau ondule (2) est differente le long de la longueur du tuyau.

5. Tuyau flexible sous pression selon l'une ou plusieurs des revendications 1 a 4, **caracterise en ce que** le tuyau ondule (2) est en polyethylene ou en polypropylene.

6. Tuyau flexible sous pression selon l'une ou plusieurs des revendications 1 a 5, **caracterise en ce que** la tresse (3) est en matiere plastique et/ou en metal.

7. Tuyau flexible sous pression selon l'une ou plusieurs des revendications 1 a 6, **caracterise en ce que** celui-ci est realise comme tuyau flexible de liaison resistant a la pression, pour douchette d'evier ou comme tuyau retractable pour douchette.
